# EUROPEAN PATENT SPECIFICATION

(11) **EP 1 583 631 B1**
(45) Date of publication and mention of the grant of the patent: **07.02.2007**
(21) Application number: 04701992.2
(22) Date of filing: 14.01.2004
(51) Int. Cl.: B23K 9/09, B23K 9/095

(54) **WELDING QUALITY CONTROL**
SCHWEISSQUALITÄTSKONTROLLE
COMMANDE DE LA QUALITE DE SOUDAGE

(30) Priority: 17.01.2003 GB 0301090
(43) Date of publication of application: 12.10.2005
(73) Proprietor: British Nuclear Fuels PLC, Seascale, Cumbria CA20 1PG (GB)
(72) Inventor: LAMBERT, John, Berkeley Glos. GL13 9PB (GB); JARRETT, Eric, Berkeley Glos. GL13 9PB (GB)
(74) Representative: Boakes, Jason Carrington
(86) International application number: PCT/GB2004/000117
(87) International publication number: WO 2004/065053

(56) References cited:
- EP-A- 0 787 555
- EP-A- 1 252 962
- US-A1- 2002 008 095

## Description

The present invention relates to a method and apparatus for providing predetermined welding conditions during a welding process. In particular, but not exclusively, the present invention relates to a method and apparatus for adjusting a power supply voltage supplied to an electrode in a Gas Metal Arc Welding (GMAW) process.

Various welding processes are known in the prior art for forming a weld at a metal weld target. One such process is metal inert gas (MIG) welding another is metal-arc active gas (MAG) welding. Both of these are forms of gas metal arc welding (GMAW) . In such a welding process a feed wire electrode is provided which is connected to a power supply. When the electrode is powered an electrical arc is produced between the electrode and the work target to be welded. An inert gas is provided in the region around the arc. As welding occurs the electrode is fed towards the work target and is consumed by melting under the intense heat produced by the arc. The metal of the electrode is deposited on the work target forming the weld.

There are two different types of (GMAW)-welding processes. These are conventional GMAW and pulsed GMAW. Pulsed GMAW welding uses a pulsed current (Typically 400A to 50A and 40Hz and 100Hz) to produce an arc gap between wire tip and the work through which droplets of superheated metal (typically the diameter of the welding wire) are propelled into the weld pool. Transfer of droplets occurs through the arc typically one droplet per pulse.

There are problems associated with welding techniques in the prior art. One problem is to control the size and shape of the metal puddle at the work target. If the puddle becomes too large gravitational components can cause undue flowing of the molten metal in the puddle. If current density reaches a value which is not sufficient to expel the metal from the end of the electrode the metal droplets which form increase in size until its mass and gravity causes it to break loose and fall towards the puddle. When droplets impact with the molten puddle in a dropping process molten metal will splash around the weld zone. This results in spattering surrounding the work and can result in a poor quality weld. Weld spatter may also be caused when the welding engineer sets the preset voltage too low often caused by welding conditions changing after laboratory test welds. When this happens the wire tip strikes the work, welding current momentarily rapidly increases, voltage short circuits and metal droplets are flung out of the pool causing spatter.

Another particular problem is poor bead shape. This is caused by long arc lengths caused by setting the power supply voltage too high. Poor bead shape can lead to poor weld strength and other problems.

In certain environments the quality of a weld and effects caused by the welding process can be critical. For example use of pulsed (GMAW) welding for conducting repairs in nuclear reactors has been used for many years. However the existence of spatter in such circumstances could, it has been argued, affect the integrity of fuel elements in the reactor. For this reason special safe guards are taken when welding in such environments. In order to prevent falling spatter "umbrellas" and welding package spatter guards are used. However their deployment is time consuming and not always completely effective in eliminating spatter. Whilst studies have shown that falling spatter does not in fact significantly effect the integrity of reactor internals it would clearly be advantageous to control the production of spatter during a welding process as spatter formation is an indication of inferior weld quality and of damaging welding equipment.

In the past such control has been possible by using a highly skilled welding engineer who, using an arc screen, has been able to view the arc at the beginning of a welding process and manually adjust various parameters of the welding process such as power supply settings. Through experience the engineer can select settings to produce welds with a reduced level of spatter, good fusion characteristics and a good bead shape. However in order to produce these good welding characteristics a skilled welding engineer must be on site to observe each weld as it is initiated. This can be an expensive and time consuming process.

Furthermore even for a single weld procedure optimum power supply voltage settings may vary over a considerable range during welding. This may be caused by variations in the quality of earth connection, environmental temperature and other factors. As a result unless a welding engineer continues to supervise or carry out the welding the weld can progress with less than optimum characteristics.

Still further problems with the welding process occur in remote welding situations in which an engineer must observe the welding process remotely. This can occur when it is not possible for a human to access the weld point.

It is an aim of embodiments of the present invention to at least partly mitigate the above-mentioned problems.

According to a first aspect of the present invention there is provided a method of pulsed arc welding comprising the steps of:
during welding, identifying a transition between a first mode of operation during which no spatter is produced, and a second mode of operation during which a minimal amount of spatter is produced; and
adjusting a power supply voltage whereby welding occurs under conditions associated with said transition; whereby
said step of identifying said transition comprises identifying near zero voltage fluctuations in said power supply voltage.

According to a second aspect of the present invention there is provided welding apparatus for providing predetermined weld conditions during a pulsed arc welding process comprising:
a main electrode for forming molten metal and an arc between the electrode and a work target;
a power supply arranged to supply a power supply voltage to said electrode;
means for identifying a transition, during welding, between a first mode of operation and a second mode of operation; and
means for adjusting the power supply voltage whereby welding occurs under conditions associated with said transition; wherein said means for identifying a transition comprises means for identifying near zero voltage fluctuations in the power supply.

Embodiments of the present invention provide the advantage that optimum working point conditions in respect of both spatter and weld quality can be maintained at all times during a weld process. The voltage power supply may be controlled automatically so that the voltage supplied to the electrode is neither so high that a poor bead shape is obtained nor too low that poor fusion occurs.

Embodiments of the present invention provide the advantage that predetermined weld conditions may be provided by welding apparatus without any necessity for human intervention. This reduces the cost and also makes the welding process less prone to human error.

Embodiments of the present invention provide the advantage that welding occurs under conditions associated with a transitional point between a mode of operation in which voltage power supply is too high and voltage power supply is too low. Automatic adjustments so that welding occurs in this transitional region ensures that regardless of any variation in environmental factor during welding the optimum power supply voltage is used at all times thereby keeping the production of spatter to a minimum whilst providing best quality welding and bead shape.

Embodiments of the present invention will now be described hereinafter, by way of example only, with reference to the accompanying drawings in which:
Figure 1 illustrates a welding process;
Figure 2 illustrates drop formation and spatter;
Figure 3 illustrates bead shapes;
Figure 4 illustrates a pulsed supply;
Figure 5 illustrates the onset of near zero voltage fluctuations; and
Figure 6 illustrates circuitry which may be used to control power supplied to welding apparatus.

In the drawings like reference numerals refer to like parts.

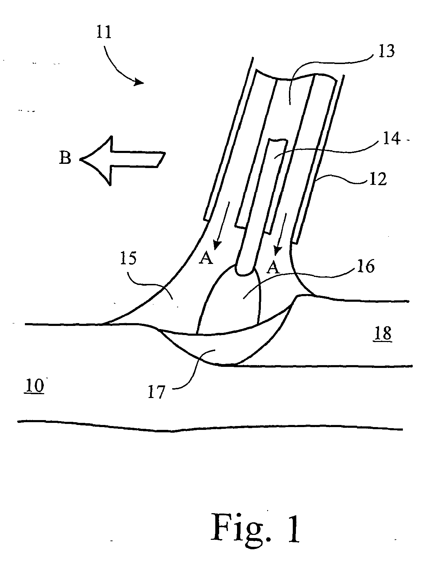

Figure 1 illustrates a welding process. In particular figure 1 illustrates a gas metal arc welding (GMAW) process. A metal work piece 10 (which acts as a target piece) is welded by virtue of gas nozzle 11. The gas nozzle includes an outer sheath 12 which surrounds an inner contact tube 13 which itself surrounds a consumable electrode 14. An inert gas is continually discharged in the direction of arrows A towards the work piece 10. The shielding gas 15 performs a number of functions such as helping to form the arc plasma, stabilising the arc routes on the material surface and ensuring a smooth transfer of molten droplets as the electrode end melts. The arc 16 is formed between the metal electrode 14 and the work piece 10. The arc produces heat which melts the tip of the electrode and ensures that a molten weld pool 17 is maintained. As the welding nozzle 11 moves along the work piece 10, illustrated by the direction of arrow B in figure 1 the molten metal forms weld metal 18.

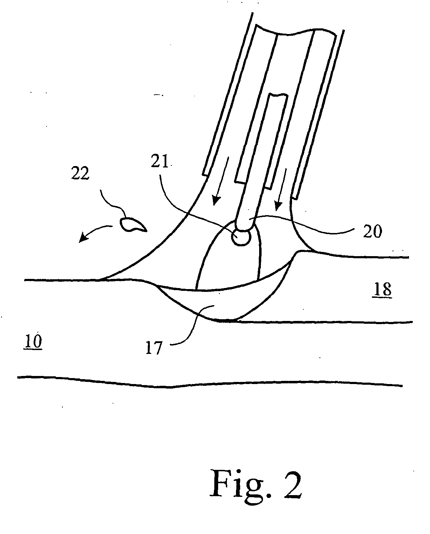

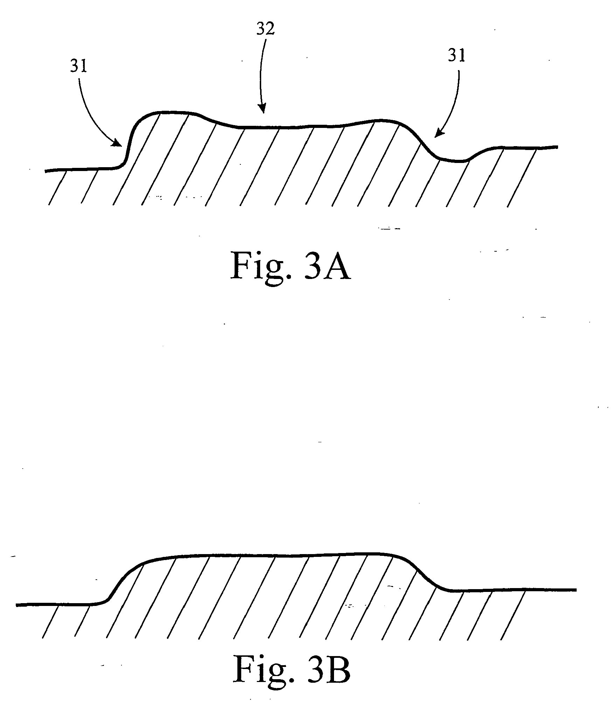

Figure 2 illustrates a welding process under conditions whereby spatter occurs. In accordance with a normal pulsed MIG process droplets of molten metal formed from melted electrode form at the electrode tip 20. Under certain circumstances the drops 21 are not caused to flow into the molten pool 17 before the gravitational forces on those drops cause the drops to fall. Under these conditions when the drops hit the surface of the molten pool further droplets 22 are caused to splash around the weld zone. These subsequently fall onto the surface of the metal where they solidify. These drops 22 form spatter. Spatter may also occur when the wire tip touches the work site which causes a short circuit and then a droplet being expelled from the weld pool. Embodiments of the present invention provide a way in which the production and distribution of the spatter droplets may be controlled. Embodiments of the present invention also provide a way in which the bead shape of the welded metal 18 may be controlled. Figure 3a illustrates a poor bead shape including steep sided end portions 31 and an uneven surface 32. A poor bead shape may also include a relatively high bead height to bead width ratio of for example 0.43. Figure 3b illustrates a more optimum bead shape having a relatively smooth profile and a bead height to bead width ratio of around 0.34. It will be appreciated by those skilled in the art that the bead shape is indicative of weld quality with a good bead shape being synonymous with a good weld quality. When the power supply voltage supplied to the electrode 14 is set too high (for example 41 volts) no spatter is produced. However the bead shape is poor with a relatively high bead height to bead width ratio. This type of (humpy) bead shape makes it very difficult to produce good quality multi-pass deposits and may cause defects such as inclusions and lack of fusion in the metal. However when the power supply voltage is set too low (for example 32 volts) continuous large spatter droplets 22 are produced. It is noted that bead shape under these low voltage conditions is satisfactory but a poor base plate fusion occurs. The optimum power supply voltage setting (for example 37.5 volts) occurs at a transitional point between no spatter and only occasional spatter droplet formation. Under these conditions bead shape is excellent, good base plate fusion occurs and spatter generation is kept to a minimum. This optimum working point condition occurs at the onset of near zero voltage fluctuations in the power supply to the electrode 14.

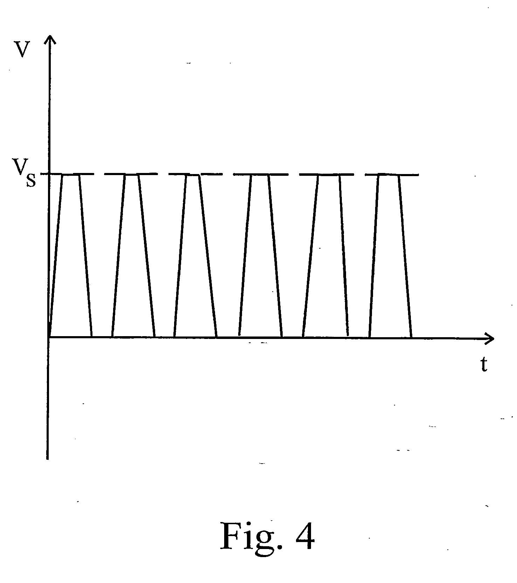

Figure 4 illustrates how the voltage power supply to the electrode 14 is pulsed during a welding process. A supply voltage VS is selected. This sets a peak voltage which may be applied to the electrode 14. This voltage is pulsed as illustrated in figure 4 so that as droplets form on the end of the electrode a predetermined amount of current is added to push that droplet across the arc and into the molten puddle. By pulsing the current at times only when a droplet is ready at the end of the electrode extra power is not needed when a droplet is not correctly formed. By reducing overall power supplied using pulsing cooling off periods between molten droplet deposition are provided. This enables welding to be used on relatively thin metal material 10 to control distortion and to avoid wastage of electrode 14. It will be understood that embodiments of the present invention are not limited to use with such thin target material.

The optimum power supply voltage VS which may be selected varies over a considerable range depending upon specific weld set up conditions. For example in remote welding a main cause of this variation is the quality of earth connection available where the weld is to be carried out. This earth connection may itself be required to be connected remotely. As the earth connection improves (which may occur at different welding locations or even during a single welding operation), the power supply voltage requires to be reduced to maintain an optimum condition. If the earth connection degrades the supply voltage may require increasing. Other variations of factors during welding may also effect the level of optimum power supply voltage. Also optimum power supply voltage setting often needs to be changed for mechanised non-remote welding for similar reasons and also where burn-off changes occur. Burn-off relates to how much welding wire is being consumed. Thus high burn off occurs when the power supply parameters are set to give high melting rates i.e. high peak currents, short background current times etc. The optimum welding condition is when burn off rate equal wire feed speed then the arc length (gap) remains constant. For these and other reasons it will be understood that an optimum power supply voltage may not remain "optimum" throughout the duration of the welding operation.

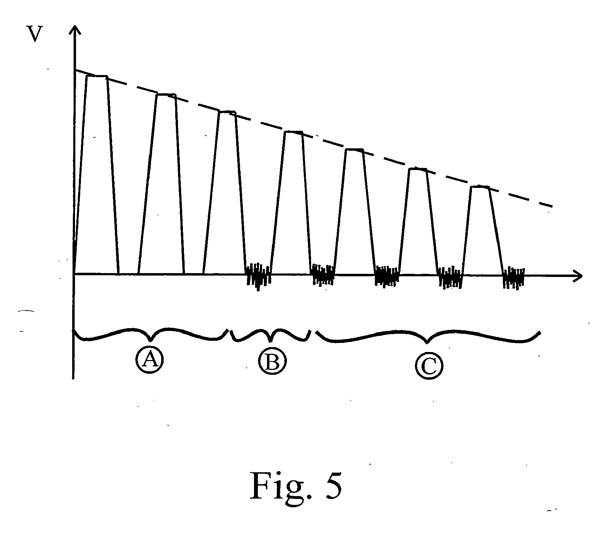

By way of example figure 5 illustrates how weld conditions may vary as the voltage supply is intentionally decreased. During a first high voltage zone, indicated by area A, the power supply voltage is too high. Although no spatter will occur in this area together with good fusion characteristics a poor bead shape is obtained. Region B indicates an optimum condition region where there is only intermittent very fine spatter of a very limited amount with good bead shape and good fusion. When the power supply voltage setting is too low indicated by region C a large amount of spatter droplets and poor fusion are produced. It will be noticed that as the power supply voltage setting is decreased from the first mode of operation in region A to a second mode of operation in region B a transition occurs and an onset of near zero voltage fluctuations 50 occur. By observing the onset of these near zero voltage fluctuations one can determine that an optimum power supply voltage setting for the environmental conditions where the welding process is to take place, have been attained. Embodiments of the present invention identify the occurrence and frequency of these near zero voltage fluctuations and then automatically adjust the power supply so that the optimum spatter condition is obtained throughout the welding period. This automatic adjustment allows the optimum conditions to be reached without constant surveillance by a skilled welding engineer and also allows for on-line adjustment should burn-off characteristics change during welding. Burn-off characteristics are conditions which can affect the melting rate of the wire, i.e. some wires for the same welding parameters may burn back (melt) differently. Such conditions are material variations affecting contact tip performance, conduction, boiling vaporisation etc.

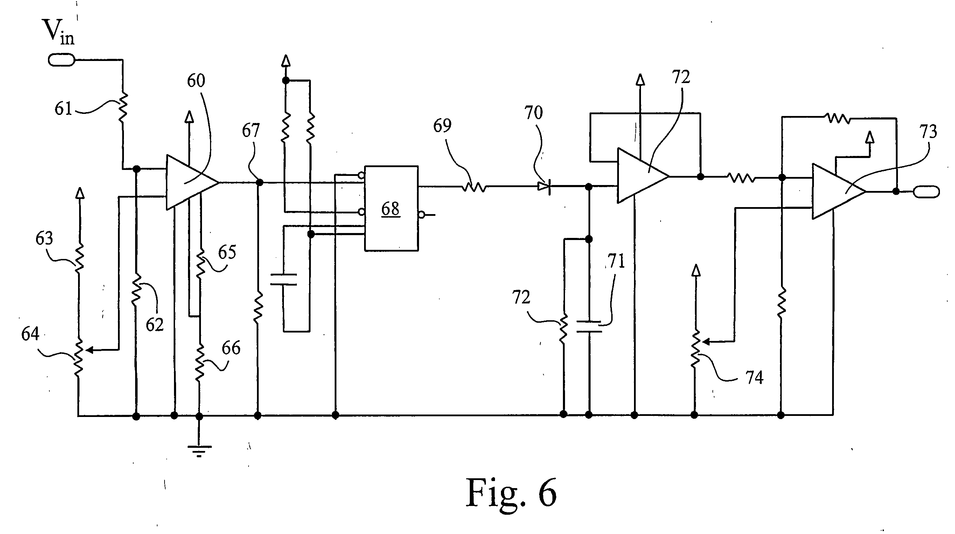

Figure 6 illustrates circuitry which can identify the onset of these near zero voltage fluctuations from the normal pulsed voltage fluctuations of the power supply source of welding apparatus. The circuitry also produces an output which can be used to control the power supply voltage to ensure good working conditions are maintained. It will be understood that embodiments of the present invention are not limited to any particular form of circuitry which can enable the onset to be detected. The weld voltage input Vin, which is the power supply voltage applied to the electrode, is applied to the inverting input of comparator 60 via a potential divider arrangement provide by resistors 61 and 62. The remaining input to the comparator 60 has a fixed voltage Vref set by variable potentiometer formed by resistors 63 and 64. By selecting the fixed voltage V ref the comparator output is made to change state when the weld input voltage approaches zero. Resistors 65 and 66 set the hysteresis of the comparator. The output of the comparator is connected to node 67 and is input into monostable 68. The output of this monostable provides a 50% duty cycle derived from the negative transition of the comparators output. This signal feeds a charge pump circuit formed by resistor 69, diode 70 and capacitor 71. Resistor 72 provides a discharge path. The resultant DC voltage on capacitor 71 is buffered by operational amplifier 72 and fed to a summing amplifier 73. This voltage is then amplified with a gain of -0.25 and added to a set weld voltage derived from a variable potentiometer 74. This preset weld voltage may be selected at the beginning of a welding process by an operator. The output of the summing amplifier 73 may be then used to combine with the set voltage in the welding power supply.

It will be understood that embodiments of the present invention provide an electronic controller which detects voltage variations which indicate the occurrence of spatter during a welding process. The controller automatically adjusts the welding power supply parameters so that all but the "occasional" spatter droplet is formed. This condition coincides with the deposition of a GMAW weld deposit with optimum fusion properties and bead shape characteristics. The controller determines the onset of spatter by using pulse height discrimination techniques. In particular the detection of near zero pulses. The resultant pulses are stretched in order to ensure a constant pulse width is obtained independent of the size of the input pulse. The integration of this measurement will produce a low frequency signal that if combined with the initial power supply settings will allow automatic adjustment of the settings to produce the optimal spatter characteristics.

Embodiments of the present invention provide the advantage that no welding engineer is required for a preliminary set-up. Voltage power supply is controlled continually to adjust settings so as to optimise welding no matter what burn-off condition prevails. Embodiments of the present invention may be used in conjunction with an ESAB ARISTO 400 pulsed MIG welding power supply. This may be used in remote reactor repairs. These may be particularly made in Magnox power stations. It will be understood that the present invention is not restricted to use in such environments. Likewise it will be understood that embodiments of the present invention may be used in various types of welding processes. For example conventional MIG or MAG, low current short circuit MIG/MAG welding (as used for thin sheet welding typical when welding car bodies) and/or submerged arc welding.

Embodiments of the present invention provide an electronic control system which may be interfaced with the arc voltage signal and power supply pendent to produce on-line corrections to operate at the optimum welding condition during a welding process.

It will be understood that a preferred embodiment of the present invention has been described hereinabove. It will likewise be understood that the present invention is not restricted to use in such an example but rather modifications and variations may be made without departing from the scope of the present invention as defined in the appended claims.

## Claims

1. A method of pulsed arc welding comprising the steps of:
during welding, identifying a transition between a first mode of operation during which no spatter (22) is produced, and a second mode of operation during which a minimal amount of spatter (22) is produced; and
adjusting a power supply voltage whereby welding occurs under conditions associated with said transition; whereby
said step of identifying said transition comprises identifying near zero voltage fluctuations in said power supply voltage.

2. The method as claimed in claim 1 further comprising automatically adjusting said power supply voltage.

3. The method as claimed in any one of claims 1 or claim 2 further comprising continually adjusting said power supply voltage.

4. The method as claimed in any one of claims 1 to 3 further comprising performing a whole welding process under said conditions.

5. The method as claimed in any one of claims 1 to 4 further comprising the steps of;
monitoring near zero power supply voltage signals during welding; and
determining when an onset of near zero voltage fluctuations occurs said onset indicating a transition from said first to said second mode of operation.

6. The method as claimed in any one of claims 1 to 5 comprising a method of pulsed metal inert gas (MIG) welding.

7. Welding apparatus for providing predetermined weld conditions during a pulsed arc welding process comprising:
a main electrode (14) for forming molten metal and an arc between the electrode and a work target (10);
a power supply arranged to supply a power supply voltage to said electrode;
means for identifying a transition, during welding, between a first mode of operation and a second mode of operation; and
means for adjusting the power supply voltage whereby welding occurs under conditions associated with said transition; wherein said means for identifying a transition comprises means for identifying near zero voltage fluctuations in the power supply.

## Patentansprüche

1. Ein Verfahren zum Impuls-Lichtbogenschweißen, das die folgenden Schritte beinhaltet:
während des Schweißens, Identifizieren eines Übergangs zwischen einer ersten Betriebsart, in der keine Spritzer (22) erzeugt werden, und einer zweiten Betriebsart, in der eine minimale Menge Spritzer (22) erzeugt wird; und
Justieren einer Stromversorgungsspannung, so dass das Schweißen unter Bedingungen in Verbindung mit dem genannten Übergang erfolgt; wobei
der genannte Schritt des Identifizierens des genannten Übergangs das Identifizieren von Spannungsschwankungen nahe null in der genannten Stromversorgungsspannung beinhaltet.

2. Das Verfahren nach Anspruch 1, das ferner das automatische Justieren der genannten Stromversorgungsspannung beinhaltet.

3. Das Verfahren nach Anspruch 1 oder 2, das ferner das kontinuierliche Justieren der genannten Stromversorgungsspannung beinhaltet.

4. Das Verfahren nach einem der Ansprüche 1 bis 3, das ferner das Ausführen eines ganzen Sckzweißvorgangs unter den genannten Bedingungen beinhaltet.

5. Das Verfahren nach einem der Ansprüche 1 bis 4, das ferner die folgenden Schritte beinhaltet:
Überwachen von Nahe-Null-Stromversorgungsspannungssignalen während des Schweißens; und
Ermitteln, wann Nahe-Null-Spannungsschwankungen einsetzen, wobei das genannte Einsetzen einen Übergang von der genannten ersten in die genannte zweite Betriebsart anzeigt.

6. Das Verfahren nach einem der Ansprüche 1 bis 5, das ein Impuls-Metall-Inertgasschweißverfahren (MIG) beinhaltet.

7. Schweißvorrichtung zum Erzielen vorbestimmter Schweißbedingungen während eines Impuls-Lichtbogenschweißvorgangs, die Folgendes umfasst:
eine Hauptelektrode (14) zum Erzeugen von Metallschmelze und eines Lichtbogens zwischen der Elektrode und einem Zielwerkstück (10);
eine Stromversorgung zum Anlegen einer Stromversorgungsspannung an die genannte Elektrode;
Mittel zum Identifizieren eines Übergangs, während des Schweißens, zwischen einer ersten Betriebsart und einer zweiten Betriebsart; und
Mittel zum Justieren der Stromversorgungsspannung, so dass das Schweißen unter Bedingungen in Verbindung mit dem genannten Übergang erfolgt; wobei das genannte Mittel zum Identifizieren eines Übergangs Mittel zum Identifizieren von Spannungsschwankungen nahe Null in der Stromversorgung umfasst.

## Revendications

1. Procédé de soudage à arc pulsé comprenant les étapes consistant à :
pendant le soudage, identifier une transition entre un premier mode de fonctionnement au cours duquel aucune projection de soudure (22) n'est produite, et un deuxième mode de fonctionnement au cours duquel une quantité minimale de projections de soudure (22) est produite; et
régler une tension d'alimentation d'énergie électrique, le soudage ayant lieu sous des conditions associées à ladite transition ; cas dans lequel
ladite étape d'identification de ladite transition comprend l'identification de fluctuations de tension quasi nulles dans ladite tension d'alimentation d'énergie électrique.

2. Procédé, selon la revendication 1, comprenant en outre un réglage automatique de ladite tension d'alimentation d'énergie électrique.

3. Procédé, selon l'une quelconque de la revendication 1 ou de la revendication 2, comprenant en outre un réglage continu de ladite tension d'alimentation d'énergie électrique.

4. Procédé, selon l'une quelconque des revendications 1 à 3, comprenant en outre l'exécution du processus de soudage tout entier sous lesdites conditions.

5. Procédé, selon l'une quelconque des revendications 1 4, comprenant en outre les étapes consistant à :
surveiller les signaux de tension d'alimentation d'énergie électrique quasi nuls au cours du soudage ; et
déterminer le moment auquel se produit le commencement des fluctuations de tension quasi nulles, ledit commencement indiquant une transition depuis ledit premier mode de fonctionnement audit deuxième mode de fonctionnement.

6. Procédé, selon l'une quelconque des revendications 1 à 5, comprenant un procédé de soudage sous gaz inerte pulsé (MIG).

7. Appareil de soudage servant à procurer des conditions de soudage prédéterminées au cours d'un processus de soudage à arc pulsé comprenant :
une électrode principale (14) pour former du métal en fusion et un arc entre l'électrode et une cible de travail (10) ;
une alimentation d'énergie électrique qui est agencée pour fournir une tension d'alimentation d'énergie électrique à ladite électrode ;
des moyens servant à identifier une transition, au cours du soudage, entre un premier mode de fonctionnement et un deuxième mode de fonctionnement ; et
des moyens servant à régler la tension d'alimentation d'énergie électrique, le soudage ayant lieu sous des conditions associées à ladite transition ; cas dans lequel lesdits moyens servant à identifier une transition comprennent des moyens servant à identifier des fluctuations de tension quasi nulles dans l'alimentation d'énergie électrique.
